# EUROPEAN PATENT APPLICATION

(11) **EP 2 230 756 A2**
(43) Date of publication of application: **22.09.2010**
(21) Application number: 10154044.1
(22) Date of filing: 19.02.2010
(51) Int. Cl.: H02M 3/337, H02M 7/00

(54) **Push-Pull Inverter**

(30) Priority: 23.02.2009 JP 2009040002
(71) Applicant: Funai Electric Co., Ltd., Daito-shi, Osaka 574-0013 (JP)
(72) Inventor: Miyamoto, Hitoshi, Daito-shi Osaka 574-0013 (JP); Jinnouchi, Takashi, Daito-shi Osaka 574-0013 (JP)
(74) Representative: Grünecker, Kinkeldey, Stockmair & Schwanhäusser Anwaltssozietät

(57) **Abstract**

A push-pull inverter allows a power supply unit to supply an input voltage to two primary windings of a transformer, and allows MOSFETs (Metal Oxide Semiconductor Field Effect Transistors) to drive the transformer in push-pull mode so as to increase the input voltage supplied from the power supply unit and to output the increased voltage as an output voltage from a secondary winding of the transformer. The two primary windings of the transformer are mixedly wound on a same bobbin without being separated, so that when the transformer is driven, the two primary windings of the transformer are prevented from resonating with each other. This makes it possible to prevent turbulence in the input current, thereby reducing loss (power loss) of the MOSFETs, allowing the transformer to have a high efficiency.

## Description

### BACKGROUND OF THE INVENTION

### 1. Field of the Invention

The present invention relates to a push-pull inverter which uses MOSFETs (Metal Oxide Semiconductor Field Effect Transistors) to drive a transformer in push-pull mode to allow the transformer to increase voltage.

### 2. Description of the Related Art

A push-pull inverter comprising a power supply unit, a transformer and MOSFETs allows the power supply unit to supply an input voltage to a primary winding section of the transformer, and also allows the MOSFETs to drive the transformer in push-pull mode whereby the input voltage supplied from the power supply unit is increased by the transformer, and the thus increased voltage is output from a secondary winding section of the transformer as an output voltage. The transformer used for the push-pull inverter (i.e. transformer driven in push-pull mode) has two primary windings as the primary winding section.

Such a push-pull inverter is used, for example, as a backlight of a liquid crystal panel to light a CCFL (Cold Cathode Fluorescent Lamp). In order to light the CCFL, a high voltage of 1000 to 1200 V is required. It is possible to obtain a higher output voltage with the same input voltage supplied to the primary winding section of the transformer if the number of turns of the secondary winding section is increased to increase the turn ratio based on the relation [Output voltage] = [Turn ratio] × [Input voltage] where the turn ratio is ratio of the number of turns of the secondary windings to that of the primary windings.

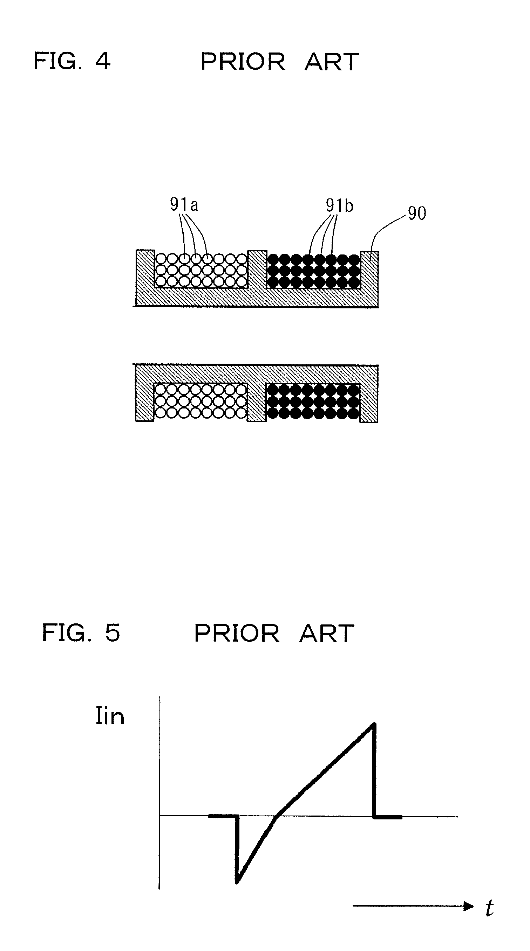

A typical push-pull inverter for lighting a CCFL supplies an input voltage of 24 V to the primary winding section of a transformer with a turn ratio of 50 so as to obtain an output voltage of 1000 to 1200 V which is required to light the CCFL. Further, as shown in FIG. 4 which is a schematic enlarged and exaggerated cross-sectional view of a transformer used for a conventional push-pull inverter, the conventional transformer uses a bobbin 90 having a separate structure, in which two primary windings 91a, 91b are separately wound on separate parts of the bobbin 90 without being mixed in order to maintain an insulation withstand voltage between the primary windings 91a and the primary winding 91 b.

However, the conventional push-pull inverter has the following problems. An increase in the turn ratio of the transformer by increasing the number of turns of the secondary winding section causes a decrease in the coupling of the transformer (reducing the flux linkage between the magnetic flux of the primary winding section and that of the secondary winding section). A decrease in the coupling of the transformer causes an increase in the inductance of the secondary winding section to increase the leakage inductance. As shown in FIG. 5, which is a graph showing a current waveform of an input current in the conventional push-pull inverter, this causes an input current Iin supplied to the primary winding section of the transformer (drain current of MOSFET to flow in the primary winding section) to be sloping upward and increase with time (t) due to internal current accumulation of the transformer.

When the input current is high, it is required to use a core with a large effective cross section as a core of the transformer in order to prevent magnetic saturation, resulting in an increase in the size of the transformer. Furthermore, an increase in the input current reduces the efficiency of the transformer because it causes an increase in the loss (power loss) of the MOSFET, which is represented by I² × Ron where I and Ron are value of the drain current and value of the on-resistance of the MOSFET, respectively. Thus, an increase in the turn ratio or increase in the number of turns of the secondary winding section causes an increase in the size of the transformer and a reduction in the efficiency of the transformer. Besides, in the transformer used for the conventional push-pull inverter, two primary windings are separately wound on separate parts or portions of the bobbin as described above, so that when the push-pull inverter (and hence the transformer) is operated, the two primary windings resonate with each other to cause turbulence in the input current, causing a loss (power loss) in the MOSFET.

There are other known units or devices in the art. For example, Japanese Laid-open Patent Publication Hei 1-248969 discloses a push-pull inverter circuit which is supplied with a voltage of 140 V as an input voltage. Further, Japanese Laid-open Patent Publication Hei 7-274522 discloses a discharge lamp lighting device which supplies a voltage of 12 V or 24 V as an input voltage to a high frequency converting circuit. Furthermore, Japanese Laid-open Patent Publication Hei 10-74592 discloses an inverter power supply unit having a transformer which can change the turn ratio between the primary winding section and the secondary winding section. However, the units or devices disclosed in the prior art do not solve the problems described above.

### SUMMARY OF THE INVENTION

An object of the present invention is to provide a push-pull inverter which can reduce the size of the transformer and allows the transformer to have a high efficiency.

According to the present invention, this object is achieved by a push-pull inverter comprising: a transformer having two primary windings and a secondary winding; a power supply unit for supplying an input voltage to the two primary windings of the transformer; and MOSFETs (Metal Oxide Semiconductor Field Effect Transistors) for switching currents flowing in the two primary windings in push-pull mode so as to drive the transformer in push-pull mode. When the input voltage is supplied to the two primary windings of the transformer from the power supply unit, the MOSFETs drive the transformer in push-pull mode so as to allow the transformer to increase the input voltage, the thus increased voltage being output from the secondary winding of the transformer as an output voltage. Further, the two primary windings are mixedly wound on a same bobbin without being separated.

According to the present invention, the two primary windings of the transformer in the push-pull inverter are mixedly wound on the same bobbin without being separated, so that when the transformer is driven, the two primary windings of the transformer are prevented from resonating with each other, thereby preventing turbulence in the input current. This makes it possible to reduce the size of the transformer and also to reduce a loss (power loss) in the MOSFETs, allowing the transformer to have a high efficiency.

Preferably, the input voltage supplied from the power supply unit to the two primary windings of the transformer is in the range from at least 50 V to at most 100 V. By supplying an input voltage in such a range, it is possible to reduce the number of turns of the secondary winding as compared with an input voltage lower than 50 V in order to obtain the same output voltage based on the relation [Output voltage] = [Turn ratio] × [Input voltage] where the turn ratio is ratio of the number of turns of the secondary windings to that of the primary windings.

A decrease in the number of turns of the secondary winding results in a decrease in the inductance of the secondary winding to reduce the leakage inductance. This causes an input current (current to flow in the MOSFETs which flows in the primary windings) to be reduced. When the input current is low, the use of a core with a small effective cross section as a core of the transformer does not cause magnetic saturation, so that a core with a small effective cross section can be used as a core of the transformer, reducing the size of the transformer. Furthermore, a low input current causes a reduction in the loss (power loss) of the MOSFETs, allowing the transformer to have a high efficiency.

Thus, by supplying an input voltage in the range from at least 50 V to at most 100 V to the transformer, the number of turns of the secondary winding can be reduced, thereby reducing the size of the transformer and allowing the transformer to have a high efficiency, as compared with the case of supplying an input voltage lower than 50 V to the transformer in order to obtain the same output voltage. Since the push-pull inverter of the present invention allows the transformer to be reduced in size and to have a high efficiency, the push-pull inverter of the present invention can be made inexpensive even when a plurality of loads such as CCFLs (Cold Cathode Fluorescent Lamps) are connected thereto.

Further preferably, the input voltage supplied to the primary windings is 82 V. This prevents the two primary windings from short-circuiting (interlayer short-circuiting), making it possible to maintain the insulating withstand voltage between the primary windings even if the primary windings are wound on the same the bobbin.

Still preferably, the two primary windings are uniformly mixed on the same bobbin. This ensures the prevention of the resonance of the two primary windings to ensure resultant effects of the push-pull inverter.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. Note that all the drawings are shown to illustrate the technical concept of the present invention or embodiments thereof, wherein:
FIG 1 is a schematic electrical circuit diagram, partially in block form, of a push-pull inverter according to an embodiment of the present embodiment;
FIG. 2A is a schematic plan view of an example of a transformer used for the push-pull inverter, while FIG. 2B is a schematic enlarged and exaggerated cross-sectional view of the transformer of FIG. 2A taken along dot-dash line X-X';
FIG. 3 is a graph showing a current waveform of an input current in the push-pull inverter;
FIG. 4 is a schematic enlarged and exaggerated cross-sectional view of a transformer used for a conventional push-pull inverter; and
FIG. 5 is a graph showing a current waveform of an input current in the conventional push-pull inverter.

### DESCRIPTION OF THE PREFERRED EMBODIMENTS

Embodiments of the present invention, as best mode for carrying out the invention, will be described hereinafter with reference to the drawings. The present invention relates to a push-pull inverter. It is to be understood that the embodiments herein are not intended as limiting, or encompassing the entire scope of, the invention. Note that like parts are designated by like reference numerals or characters throughout the drawings.

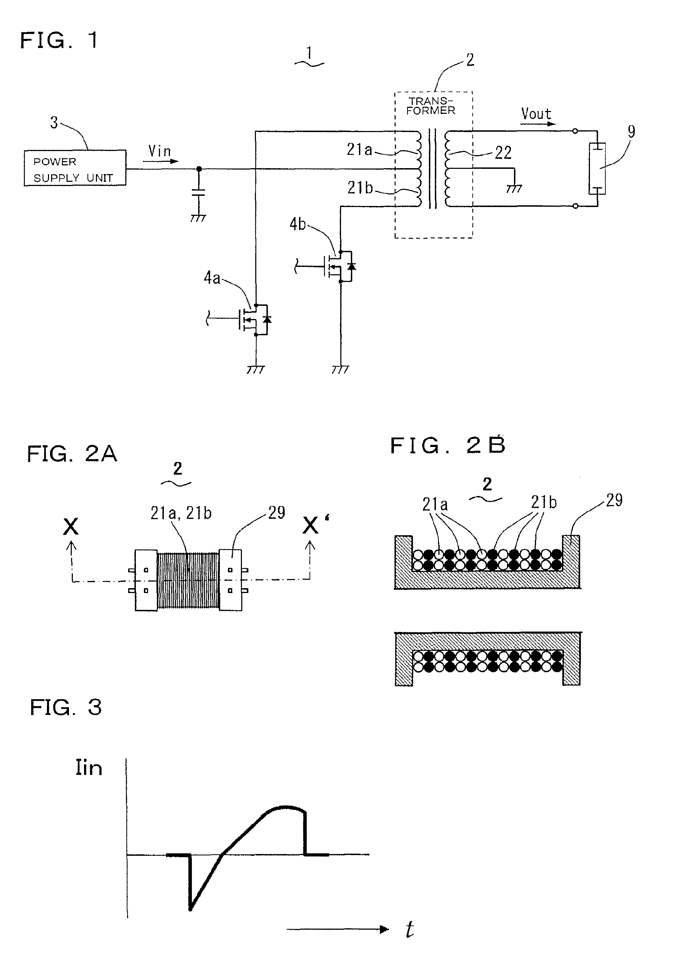

A push-pull inverter 1 of an embodiment of the present invention will be described with reference to FIGs. 1 to 3. FIG. 1 is a schematic electrical circuit diagram, partially in block form, of the push-pull inverter 1. The push-pull inverter 1 comprises a transformer 2, a power supply unit 3, MOSFETs (Metal Oxide Semiconductor Field Effect Transistors) 4a, 4b, and so on. The push-pull inverter 1 uses the MOSFETS 4a, 4b to drive the transformer 2 in push-pull mode so as to allow the transformer 2 to increase voltage. The transformer 2 has two primary windings 21a, 21b and a secondary winding 22. The primary windings 21a, 21b are connected in series, and a power supply unit 3 is connected to a connection point between the primary windings 21a, 21b. The MOSFETs 4a, 4b are respectively connected to the primary windings 21a, 21b.

The turn ratio of the transformer 2 (ratio of the number of turns of the secondary winding 22 to that of the primary windings 21a, 21b) used here is 14. The secondary winding 22 is connected, for example, to a CCFL (Cold Cathode Fluorescent Lamp) 9 as a load. The power supply unit 3 connected to the connection point between the primary windings 21a, 21b supplies a DC (direct current) input voltage Vin to the two primary windings 21a, 21b of the transformer 2. The power supply unit 3 generates the DC input voltage Vin from an AC (alternating current) voltage supplied from a commercial power source (not shown) to supply the input voltage Vin to the primary windings 21 a, 21b. The input voltage Vin used as an example here is 82 V.

The MOSFETs 4a, 4b are switching elements to drive the transformer in push-pull mode. The MOSFET 4a has a drain connected to the primary winding 21a of the transformer 2, and a source connected to ground, while the MOSFET 4b has a drain connected to the primary winding 21b of the transformer 2, and a source connected to ground. On the other hand, a switching control unit (not shown) is connected to gates of the MOSFETs 4a, 4b to turn the MOSFETs 4a, 4b on/off. When the MOSFET 4a is in on-state, the input voltage Vin from the power supply unit 3 causes a current to flow from the power supply unit 3 to ground through the primary winding 21a of the transformer 2 and the MOSFET 4a. Similarly, when the MOSFET 4b is in on-state, the input voltage Vin from the power supply unit 3 causes a current to flow from the power supply unit 3 to ground through the primary winding 21b of the transformer 2 and the MOSFET 4b. The MOSFETs 4a, 4b are alternately turned on and off at predetermined intervals by the switching control unit to switch the currents flowing in the two primary windings 21 a, 21b in push-pull mode so as to drive the transformer 2 in push-pull mode.

The thus configured push-pull inverter 1 allows the power supply unit 3 to supply an input voltage Vin to the two primary windings 21a, 21b of the transformer 2, and also allows the MOSFETs 4a, 4b to drive the transformer 2 in push-pull mode when the input voltage Vin is supplied to the primary windings 21a, 21b so that the transformer 2 increases or boosts the input voltage Vin supplied from the power supply unit 3 so as to output the thus increased voltage as an output voltage Vout from the secondary winding 22 of the transformer 2. The output voltage Vout is supplied to the CCFL 9. In the push-pull inverter 1 of the present embodiment, the turn ratio of the transformer 2 (ratio of the number of turns of the secondary winding 22 to that of the primary windings 21a, 21b) is set at 14, and the input voltage Vin supplied to the primary windings 21a, 21b of the transformer 2 is set at 82 V, so as to obtain an output voltage of 1000 to 1200 V which is required to light the CCFL 9.

FIG. 2A is a schematic plan view of an example of a transformer 2 used for the push-pull inverter 1, while FIG. 2B is a schematic enlarged and exaggerated cross-sectional view of the transformer 2 of FIG. 2A taken along dot-dash line X-X'. As apparent from FIGs. 2A and 2B, the two primary windings 21 a, 21b of the transformer 2 are mixedly wound on a same bobbin 29 (same portion of the bobbin 29) without being separated. It is a finding of the present invention that the mixed winding of the two primary windings makes it possible to prevent the two primary windings from resonating with each other, preventing turbulence in the input current which causes a loss (power loss) in the MOSFETs.

Preferably, the two primary windings 21a, 21b are uniformly mixed on the same bobbin 29 (same portion of the bobbin 29) such that the two primary windings 2 1 a, 2 1 b are alternately wound as represented by FIG. 2B, or are wound alternately every successive two windings, or are wound alternately every successive three windings, or so on. However, such alternation is not required to be strictly exact as long as the distribution of the two primary windings 21a, 21b is uniform over the same bobbin 29 to the extent that the two primary windings 21a, 21b can be sufficiently prevented from resonating with each other to prevent turbulence in the input current from a practical point of view. The push-pull inverter 1 of the present embodiment can reduce the size of the transformer 2, and allows the transformer 2 to have a high efficiency. This will be described in detail blow.

Assuming the same output voltage Vout, it is understood from the relation [Output voltage Vout] = [Turn ratio] × [Input voltage Vin] (where the turn ratio is ratio of the number of turns of the secondary winding 22 to that of the primary windings 21 a, 21b) that an increase in the input voltage Vin can reduce the number of turns of the secondary winding 22. For example, an input voltage Vin in the range from at least 50 V to at most 100 V can reduce the number of turns of the secondary winding 22 as compared with an input voltage Vin lower than 50 V in order to obtain the same output voltage Vout. A decrease in the number of turns of the secondary winding 22 results in better coupling of the transformer 2 (increasing the flux linkage between the magnetic flux of the primary windings 21a, 21b and that of the secondary winding 22). An increase in the coupling of the transformer 2 causes a decrease in the inductance of the secondary winding 22 to reduce the leakage inductance. As shown in FIG. 3, which is a graph showing a current waveform of an input current in the push-pull inverter 1, this causes an input current Iin supplied to the primary windings 21a, 21b of the transformer 2 (drain current of the MOSFETs 4a, 4b to flow in the primary windings 21a, 21b) to be sloping slightly downward with time (t) and thereby reduced due to effective energy transfer.

When the input current Iin is low, the use of a core with a small effective cross section as a core of the transformer 2 does not cause magnetic saturation, so that a core with a small effective cross section can be used as a core of the transformer 2. Furthermore, a low input current Iin causes a reduction in the loss (power loss) of the MOSFETs 4a, 4b, which is represented by I² × Ron where I and Ron are value of the drain current (value of the input current Iin) and value of the on-resistance of the MOSFETs 4a, 4b, respectively. Thus, an input voltage Vin in the range from at least 50 V to at most 100 V can reduce effective the required effective cross section (sufficient effective cross section of the core to prevent magnetic saturation), and can also reduce the loss of the MOSFETs 4a, 4b, as compared with an input voltage Vin lower than 50 V in order to obtain the same output voltage Vout.

In order to obtain an output voltage of 1000 to 1200 V, the following is a comparison between an input voltage Vin of 24 V (turn ratio=50) and an input voltage of 82 V (turn ratio=14). In the case of the input voltage Vin of 24 V, the required effective cross section of the core of the transformer 2 is 28 mm², while that in the case of the input voltage Vin of 84 V is 18 mm². Further, assuming that the loss of the MOSFETs 4a, 4b is 1 (one) in the case of the input voltage Vin of 24 V, that in the case of the input voltage of 84 V is 0.6 (reduced by 40% from the case of the input voltage of 24 V). Thus, considering the case of obtaining the same output voltage Vout, an increase in the input voltage Vin makes it possible to reduce the number of turns of the secondary winding 22, whereby the required effective cross section of the core of the transformer 2 can be reduced. This makes it possible to reduce the size of the transformer 2, and to reduce the loss of the MOSFETs 4a, 4b, allowing the transformer 2 to have a high efficiency.

As described above, in the push-pull inverter 1 of the present embodiment, an input voltage Vin of 82 V, for example, (which is in the range from at least 50 V to at most 100 V) is supplied to the primary windings 21a, 21b of the transformer 2. Thus, as compared with a conventional push-pull inverter in which an input voltage of 24 V, for example, (which is lower than 50 V) is supplied to the primary winding section of the transformer, the push-pull inverter 1 of the present embodiment makes it possible to reduce the size of the transformer 2 and allows the transformer 2 to have a high efficiency in order to obtain the same output voltage Vout (voltage in the range of 1000 to 1200 V required to light the CCFL 9).

Now the insulation withstand voltage between the two primary windings 21a, 21b of the transformer 2 should be considered. When the two primary windings 21a, 21b are mixedly wound on the same bobbin 29 (same portion of the bobbin 29), the withstand voltage (insulation withstand voltage) at or below which the primary windings 21a, 21b do not short-circuit (interlayer short-circuit) is normally 250 V. In addition, normally in push-pull mode, a voltage two to three times higher than the input voltage Vin is applied to the primary windings 21a, 21b. This means that if the input voltage Vin is in the range Vin = 250 V / 3 ≈83.3 V, the two primary windings 21a, 21b are prevented from short-circuiting (interlayer short-circuiting), making it possible to maintain the insulating withstand voltage between the primary windings 21a, 21b, even if the primary windings 21a, 21b are wound on the same portion of the bobbin 29.

As described in the foregoing, in the push-pull inverter 1 of the present embodiment, an input voltage Vin of 82 V is supplied to the primary windings 21 a, 21b of the transformer 2, so that the two primary windings 21a, 21b are prevented from short-circuiting (interlayer short-circuiting), maintaining the insulating withstand voltage between the primary windings 21a, 21b, even if the primary windings 21a, 21b are wound on the same portion of the bobbin 29. In addition, in the push-pull inverter 1 of the present embodiment, the two primary windings 21a, 21b are mixedly wound on the same bobbin 29 (same portion of the bobbin 29) without being separated, so that when the transformer 2 is driven, the two primary windings 21 a, 21 b are prevented from resonating with each other, preventing turbulence in the input current Iin. This makes it possible to reduce the size of the transformer 2 and to reduce a loss (power loss) in the MOSFETs 4a, 4b, allowing the transformer 2 to have a higher efficiency. Since the push-pull inverter 1 of the present embodiment allows the transformer 2 to be reduced in size and to have a high efficiency, a plurality of the CCFLs 9 can be connected with an inexpensive configuration.

It is to be noted that the present invention is not limited to the above embodiments, and various modifications are possible within the spirit and scope of the present invention. For example, the input voltage supplied to the primary windings of the transformer from the power supply unit is not limited to 82 V, and can be in the range from at least 50 V to at most 100 V. Such an input voltage can also reduce the size of the transformer and allows the transformer to have a higher efficiency as compared with an input voltage lower than 50 V in order to obtain the same output voltage.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the spirit and scope of the present invention.

This application is based on Japanese patent application 2009-040002 filed February 23, 2009, the content of which is hereby incorporated by reference.

## Claims

1. A push-pull inverter comprising:
a transformer having two primary windings and a secondary winding;
a power supply unit for supplying an input voltage to the two primary windings of the transformer;
and MOSFETs (Metal Oxide Semiconductor Field Effect Transistors) for switching currents flowing in the two primary windings in push-pull mode so as to drive the transformer in push-pull mode,
wherein when the input voltage is supplied to the two primary windings of the transformer from the power supply unit, the MOSFETs drive the transformer in push-pull mode so as to allow the transformer to increase the input voltage, the thus increased voltage being output from the secondary winding of the transformer as an output voltage, and
wherein the two primary windings are mixedly wound on a same bobbin without being separated.

2. The push-pull inverter according to claim 1,
wherein the input voltage supplied from the power supply unit to the two primary windings of the transformer is in the range from at least 50 V to at most 100 V.

3. The push-pull inverter according to claim 2,
wherein the input voltage supplied to the primary windings is 82 V.

4. The push-pull inverter according to claim 1,
wherein the two primary windings are uniformly mixed on the same bobbin.
